# NEW EUROPEAN PATENT SPECIFICATION

(11) **EP 2 199 640 B2**
(45) Date of publication and mention of the opposition decision: **05.07.2017**
(45) Mention of the grant of the patent: 17.10.2012
(21) Application number: 09179350.5
(22) Date of filing: 15.12.2009
(51) Int. Cl.: F16D 65/092, F16D 55/22

(54) **A disc brake**
Scheibenbremse
Frein à disque

(30) Priority: 16.12.2008 GB 0822898
(43) Date of publication of application: 23.06.2010
(73) Proprietor: Meritor Heavy Vehicle Braking Systems (UK) Limited, Cwmbran, Gwent NP44 3XU (GB)
(72) Inventor: Kumar, Kishan, 560078, Bangalore (IN); Pateel, Darshan, 560060, Bangalore (IN); Kulkarni, Sanjeev, 560040, Bangalore (IN); Morris, Jason, Neath & Port Talbot, Gwent SA11 5AL (GB); Roberts, Paul, Newport, NP20 5QU (GB)
(74) Representative: Foot, Paul Matthew James

(56) References cited:
- EP-A- 1 998 066
- EP-A1- 0 752 541
- EP-A1- 1 473 481
- EP-A2- 1 391 628
- WO-A-2007/122100
- DE-A1- 3 044 185
- DE-A1- 19 520 050
- DE-A1-102005 001 482
- FR-A1- 2 778 711
- US-A- 4 537 292

## Description

The present invention relates to a disc brake. More particularly, the present invention relates to a disc brake incorporating an arrangement for ensuring that brake pads are always fitted in their correct orientation and correct location.

It is known from EP 0 752 541 (ArvinMeritor, Inc) to provide formations on a pair of brake pads and corresponding features in a brake carrier to ensure that it is not possible for the brake to be fully assembled with the pads orientated with the backplate thereof facing the brake disc. Incorrectly fitting brake pads in this manner is highly undesirable since the braking effectiveness of the brake is dramatically diminished and damage to the pad and brake disc may also occur.

In this patent, the two pads are completely identical and are provided with a formation that has rotational symmetry about an axis extending perpendicular to the rotational axis of the brake disc, so that although the pads cannot be fitted with the backplate facing the disc, the pads are interchangeable in an inboard and outboard sense.

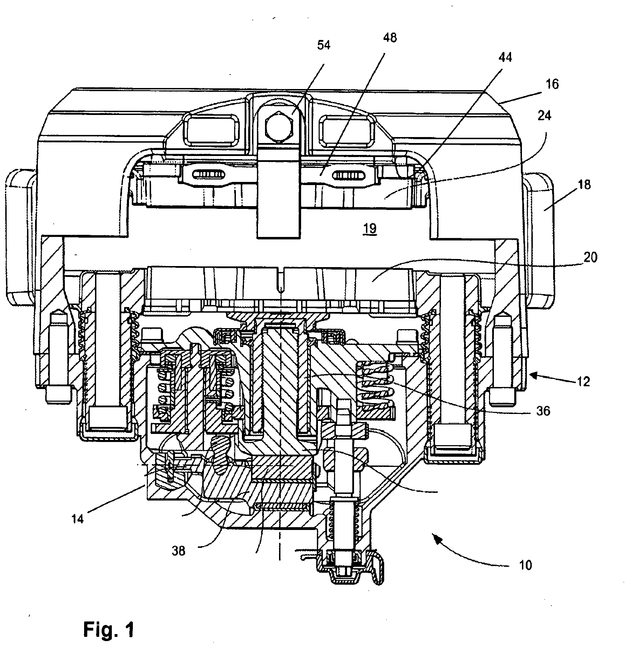

In most applications such an arrangement is entirely satisfactory. However, the inventors have recognised that in some circumstances the inboard and outboard pads have differing dimensions or properties and it is not desirable that they be interchangeable. An example of such a general arrangement is the type of brake illustrated in Figure 1 (although this brake incorporates further features in accordance with the present invention as discussed below). This brake is a sliding caliper air disc brake having a single actuating piston/tappet that applies the inboard brake pad directly. The inboard pad requires a relatively thick backplate because the central loading from the piston may otherwise tend to cause the inboard pad to flex during its application. In contrast, the outboard pad is supported across virtually the entire rear face of the backplate, and therefore a thinner backplate may be used to save weight and materials cost. The fitting of these two pads in the incorrect location would, at the very least, be likely to cause uneven wear on the outboard pad when fitted in the inboard location, and therefore require the premature replacement of the pad.

DE102005001482 discloses a brake caliper for a disc brake for motorcycles and/or bicycles having a housing for the accommodation of two brake linings with brake friction material that are mirror images of one another, the brake linings being configured to clamp a brake disc through the brake friction material on braking. The brake linings of DE102005001482 each have an arm that prevents an outboard brake lining fitting into the housing in the inboard brake lining location, and vice versa, with the brake friction material thereof facing toward the brake disc. However, as the brake linings are mirror images of one another, there is nothing to prevent an outboard brake lining fitting into the housing in the inboard brake lining location, and vice versa, with the brake friction material thereof facing away from the brake disc. The brake linings of DE102005001482 could thus be incorrectly fitted.

EP1998066 shows a hydraulic caliper brake having a housing formed from two halves which accommodates stator plates having friction material intended to engage a brake rotor on braking. The stator plates are identical and thus interchangeable.

US4537292 shows a disc brake with a pair of friction pads configured to engage a brake disc on braking, with at least one of the friction pads mounted on a support member. The inboard and outboard pads are substantially mirror images of one another, with one pad having a extension not seen in the other pad. However, this extension does not prevent the pads being interchangeable.

DE19520050 discloses a disc brake having a calliper and a pair of interchangeable pads having back plates, the pads being supported by the caliper.

WO200/122100 discloses a disc brake having a brake caliper and interchangeable brake linings mounted therein.

The inventors have recognised that it is therefore desirable in such circumstances to provide means to prevent or inhibit such incorrect fitting from occurring.

Accordingly, a first aspect of the present invention provides a disc brake according to claim 1.

Embodiments of the present invention will now be described, by way of example only, with reference to the accompanying drawings in which:
FIGURE 1 is a partial cross-sectional view through a brake according to an embodiment of the present invention;
FIGURE 2 is a perspective view of a carrier portion and brake pads of the brake of Figure 1;
FIGURE 3 is a perspective view of the carrier portion alone of the brake of Figure 1;
FIGURES 4A and 4B are end views looking outboard and inboard respectively at the carrier and brake pads of Figure 2;
FIGURE 5 is a carrier of a brake according to another embodiment of the present invention;
FIGURES 6A and 6B are perspective views of outboard and inboard brake pads respectively for fitment within the carrier of Figure 5;
FIGURE 7 is an isometric view of a portion of a brake caliper of a brake according to another embodiment of the present invention; and
FIGURE 8 is an isometric view of an outboard brake pad for fitment to the brake caliper of Figure 7.

With reference to Figure 1, a plan view of a brake is indicated generally at 10 according to one embodiment of the present invention is shown. The brake comprises a caliper 12 formed from a housing portion 14 and a bridge portion 16 with a radial aperture 17. When considering a vehicle upon which the brake is to be mounted, the housing 14 is located inboard and the bridge 16 outboard with respect to that vehicle. The caliper 12 is slidably mounted for movement in an inboard/outboard direction with respect to a carrier 18. The carrier 18 is mounted to a fixed location with respect to a vehicle axle or steering knuckle (not shown) and is arranged to receive a brake disc or rotor (not shown) in the space indicated at 19.

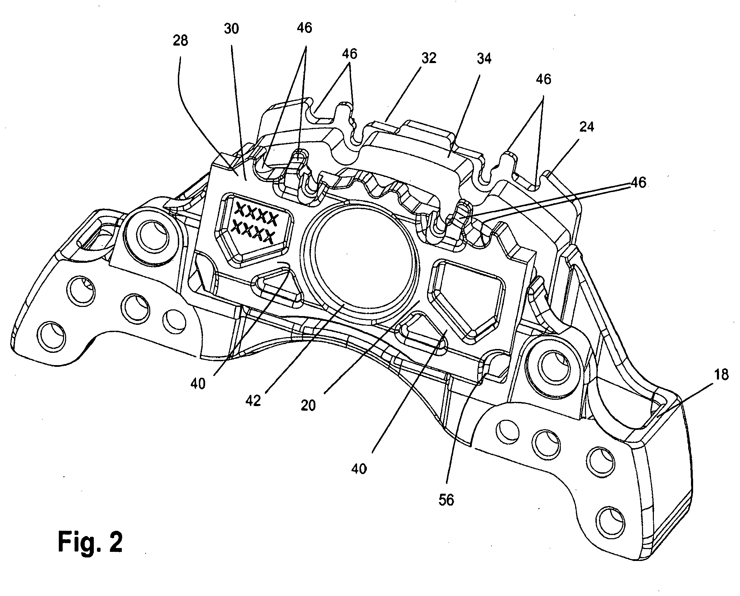

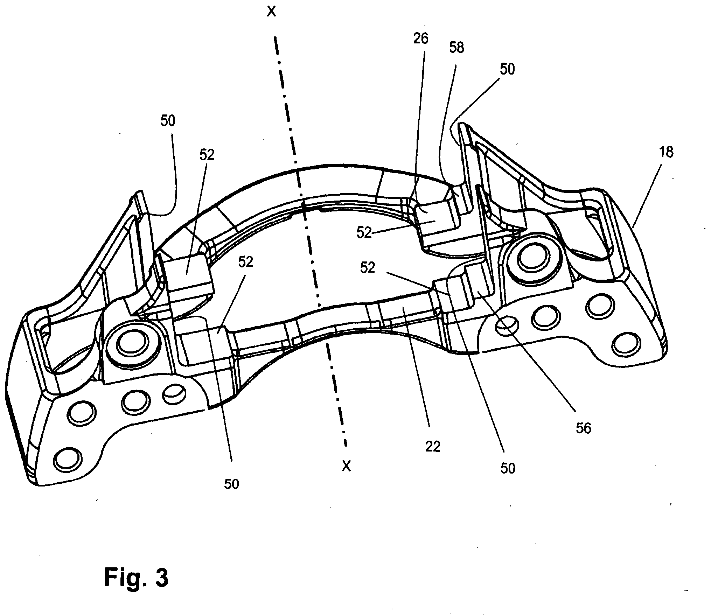

With reference to Figures 2 and 3, an inboard brake pad 20 is located within a first pad mounting structure in the form of an inboard opening 22 of the carrier 18 that is arranged to support the pad in a radially inward and circumferential (i.e. rotational) direction. Likewise, an outboard brake pad 24 is located within a second pad mounting structure in the form of an outboard opening 26 and is supported therein in a similar manner to the inboard brake pad 20. The pads 20, 24 may be fitted in the openings 22 and 26 via the radial aperture 17.

The inboard brake pad 20 comprises a backplate 28 and friction material 30 secured to the backplate. The backplate 28 has the function of imparting strength to the brake pad 20, since the friction material 30 itself is relatively brittle. The inboard backplate 28 is relatively thick and is manufactured in this embodiment in a casting process from iron or steel to support the friction material 30. Further details of the inboard backplate 28 are discussed in more detail below. The outboard brake pad 24 also comprises a backplate 32 and friction material 34.

For the effective operation of the brake 10 it is critical that the brake is assembled with the pads placed in the carrier openings 22 and 26 with the friction material 30 and 34 facing the brake disc for the reasons set out above.

Referring back to Figure 1, it can be seen from the cut-away portion thereof that the brake has a single piston 36 that engages a rear face of the inboard pad 20, and is actuated via an air chamber (not shown) and operating shaft 38 in a known manner as discussed in further detail in EP 1 852 627 to the present applicant.

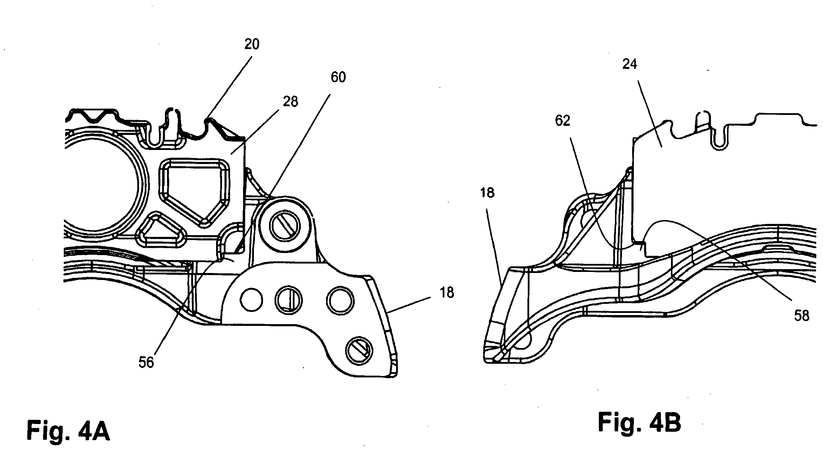

As can be seen from Figures 2, 4A and 4B, the form of the inboard backplate 28 is different from the outboard backplate 32. The inboard backplate 28 is substantially thicker than the outboard backplate 32 (in this embodiment 15mm thick) by virtue of having stiffening elements 40 and a central circular depression 42 to receive the head of the piston 36 formed therein. Such an arrangement is desirable for the inboard pad 20 in order that it is able to receive the central loading from the piston 36 during braking without appreciable flexing of the pad occurring. In other embodiments the arrangement of the backplate may be altered according to the particular requirements of the brake.

By contrast, the outboard pad backplate 32 is a substantially planar cast component (without stiffening ribs) that is significantly thinner (approximately half as thin at 8mm) as the inboard backplate 28. It is possible to use a thinner backplate 28 for the outboard pad 24 because the backplate is supported across substantially all of its rear face by a corresponding support surface 44 of the caliper.

Nevertheless, despite the differences in the thickness and shape of the inboard and outboard backplates 28 and 32, the general shape and dimensions of their peripheries, as well as formations 46 provided for the attachment of a pad spring 48 are functionally the same. Specifically, their circumferential width and radial height are substantially the same. In addition, the thickness and dimensions of the friction material 30 and 34 on the two pads is identical.

Thus, without the arrangement provided in the present invention, it is possible for the outboard pad 24 to be fitted in the inboard opening 22, and for the inboard pad 20 to be fitted in the outboard opening 26 in addition to the possibility of the pads being fitted with the friction material 30 and 34 in the wrong direction. In particular, the fitting of the outboard pad 24 in the inboard opening 22 in contact with the piston 36 is undesirable, since this may lead to a flexing of the pad, thus limiting its useful life due to uneven wear or cracking of friction material because the centre of the pad proximate to the piston would wear more rapidly than the friction material at the circumferential ends thereof.

To combat this problem the inboard pad 20 and outboard pad 24 are provided with inboard and outboard formations 60 and 62 that define, together with corresponding features in the openings, an interface with the desired opening which is incompatible with the interface of the other pad with its desired opening. Consequently, if the pad 20, 24 is placed within the incorrect opening 22, 26, and/or an incorrect orientation, that pad cannot be seated properly within that opening to the extent that the assembly of the brake cannot be completed.

Specifically, with reference to Figure 1 and Figure 3 of the present invention, it can be seen that the openings 22 and 26 in the carrier each comprise two upright abutment surfaces 50 that are mutually parallel and take the circumferential loads from the brake pads 20 and 24 that are frictionally induced under braking and transmit these forces to the vehicle axle. The openings 22 and 26 further comprise two horizontal abutment surfaces 52 each. These abutment surfaces 52 maintain the pad in a desired radial relationship with respect to the rotor, in conjunction with a pad strap 54 that extends across aperture 17 over the pads and the pad springs 48, but enable the pads to advance towards the disc as they wear.

It can be seen in Figure 3 that the horizontal abutment surfaces 52 to the left of the carrier 18 as viewed in Figure 3 are substantially planar and merge directly into the adjacent upright abutment surfaces 50. At the right hand end, the horizontal abutment surfaces 52 comprise a feature in the form of a step. The inboard step 56 is provided at the junction of the horizontal 52 and upright 50 abutment surfaces, as is the outboard step 58. However, the shapes of the two steps 56, 58 differ. The inboard step 56 is shallower in the radial direction, but wider in the circumferential direction than the outboard step 58. Since the steps 56, 58 are both at the same end of the openings 22 and 26, the openings do not have rotational symmetry about a radial axis X-X that extends through the centre of the gap 19. Furthermore, since the dimensions of the steps 56 and 58 differ, the openings 22 and 26 do not have mirror symmetry about the plane of the brake disc. The location of the steps 56, 58 means they can be easily formed as part of the machining operation of the carrier abutments.

The inboard formation is a notch 60 shaped to conform to the inboard step 56 (although the two need not actually be in contact when assembled) and the outboard formation is a notch 62 that conform to the outboard step 58 in a similar way. This notch location is advantageous since it does not appreciably weaken the pads.

Thus, if an attempt is made to seat either pad 20, 24 in its incorrect location or orientation, the size and shape of the steps will prevent that pad from seating correctly within the opening 22 or 26. This means that it would not be possible for the pad strap 54 to be secured over the bridge 16 and the brake could not therefore be properly assembled.

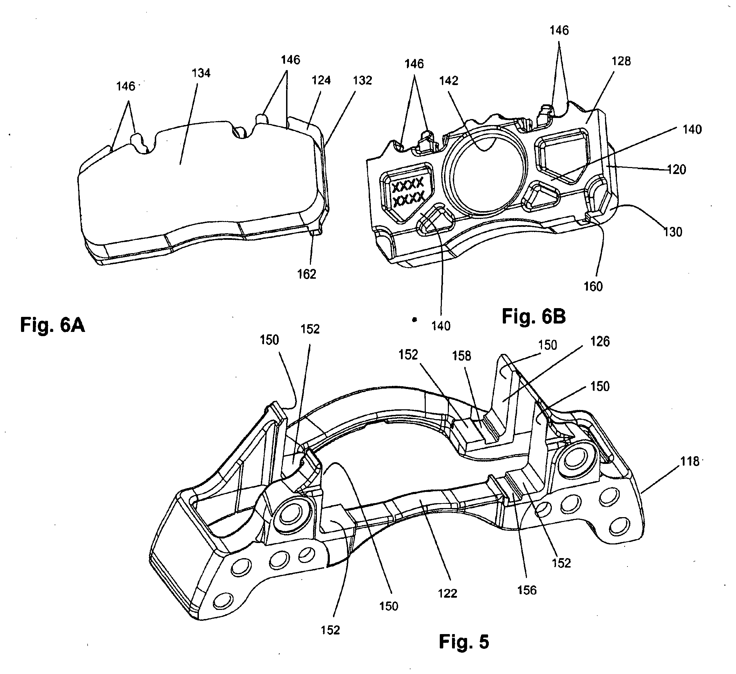

Figures 5, 6A and 6B illustrate a carrier 118, outboard pad 124 and inboard pad 120 respectively according to another embodiment of the present invention. In this embodiment, like parts are labelled using like numerals, but with the addition of the prefix "1".

It can be seen from Figure 5 that the steps 56 and 58 have been replaced by an inboard trough or slot 156 extending across the inboard right hand horizontal abutment surface 152. It can be seen that the trough 156 is located towards the left hand side of the horizontal abutment surface 152. A similar trough 158 is provided in the outboard right hand horizontal abutment surface 152, but is located towards the right hand side of the surface. Again, it is therefore apparent that the inboard opening 122 and outboard opening 126 have neither rotational nor mirror symmetry. This means that by virtue of corresponding formations (in the form of downwardly projecting lugs 60 and 62) it is only possible to properly assemble the brake with the pads 120 and 124 in the correct opening 122 and 126 and in their correct orientation.

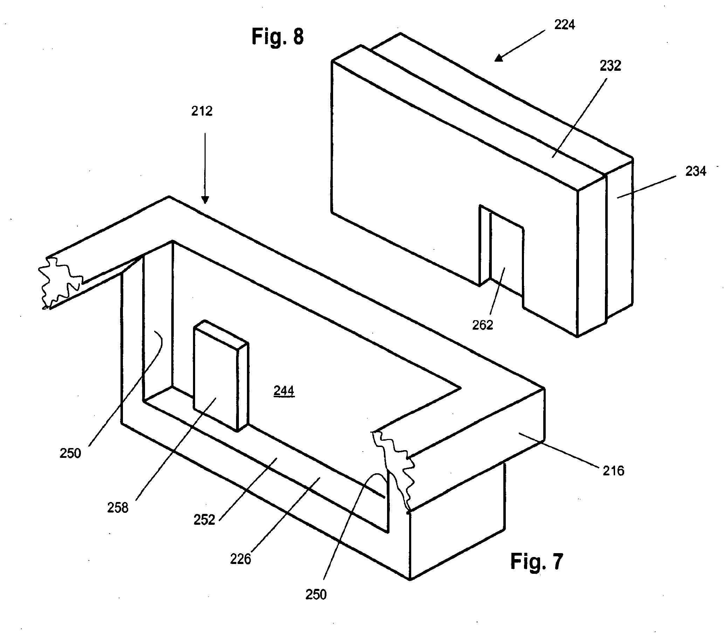

Referring now to Figures 7 and 8, a third embodiment of the present invention is illustrated. In this embodiment, like parts are illustrated by like numerals, but with the addition of the prefix "2". Only differences between the third embodiment and the preceding two embodiments are discussed in more detail.

This embodiment differs from the preceding embodiments in that the outboard brake pad 224 is supported entirely by the caliper 212. The carrier (not shown) only supports the inboard pad and does not extend over the rotor. This type of arrangement is shown in more detail in GB 2 413 162 in the name of the present applicant.

As a consequence of this arrangement, rather than the outboard opening being provided in the carrier, a corresponding opening 226 is formed in the caliper 212, so that as well as the caliper transferring the clamp load to the outboard brake pad via surface 244, it additionally comprises the outboard upright abutment surfaces 250 and horizontal abutment surfaces 252 to transfer the torque loads to the carrier via the bridge 216 and housing (not shown).

This embodiment further differs in terms of the interface arrangement to prevent incorrect pad fitting. In this embodiment, the outboard interface is defined by a lug 262 that does not extend through the entire depth of the horizontal abutment surface 252. This is possible because the spatial relationship between the outboard brake pad 224 and caliper 212 remains fixed and no relative sliding of the pad 224 with respect to the upright 250 and horizontal 252 abutment surfaces occurs.

In this embodiment, an inboard pad having the same type of notch 60 or lug 160 as in the first and second embodiments may be used since the different interface arrangements remain incompatible due to a lack of rotational and mirror symmetry to prevent the pads being fitted in the wrong location or in the wrong orientation.

It should be appreciated that the directional terms such as horizontal, upright, etc. should not be construed as limiting since brakes of the type described herein may be mounted in numerous orientations with respect to an axle and disc. Use of such terms is merely for the purposes of clarity and convenience.

It should be understood that numerous changes may be made within the scope of the present invention. For example, numerous alternative shapes for the interface and locations of the interface may be provided on the pads and pad supports provided those arrangements do not result in an arrangement of inboard and outboard openings that have either rotational or mirror symmetry. In addition, the interface formation may be provided on a non-sliding surface of the openings (i.e. intermediate the horizontal support surfaces). In some instances it may be possible to provide the formations on the upright support surfaces or upright portions of the openings that do not act as sliding surfaces. A similar arrangement may be employed on fixed caliper, sliding rotor type disc brakes or on fixed caliper, fixed rotor brakes which have means for directly driving the outboard pad. The backplates may be forged, stamped or fabricated rather than being cast.

## Claims

1. A disc brake (10) comprising:
an actuation mechanism (12);
a caliper (12), formed from a housing portion (14) and a bridge portion (16);
first (22) and second (26) brake pad mounting structures to be located, in use, adjacent opposing inboard and outboard faces respectively of a brake rotor to be braked;
first (20) and second (24) brake pads located by the first (22) and second (26) mounting structures respectively such that upon application of the actuation mechanism the pads (20, 24) clamp the rotor and brake torque is reacted by the pad mounting structures (22, 26), the first pad (20) having a different functional requirement to the second pad (24) such that fitment of the first pad (20) in the second structure (26) and/or the second pad (24) in the first structure (22) impairs the safety, functionality or durability of the brake (10),
wherein the caliper (12) comprises an aperture (17) for the fitting and removal of the pads (20, 24) in a radial direction, wherein the pads (20, 24) are configured to be retained radially in the mounting structures (22, 26) by a pad strap (54);
wherein to prevent or inhibit such incorrect fitting, the first pad (20) comprises on a peripheral face or rear face thereof a first formation (60) in such a location that it may only be successfully fitted in the first mounting structure (22) and only successfully fitted in the correct orientation with the brake (10) fully assembled and the second pad (24) comprises a second formation (62) different from the first (60) such that it may only be successfully fitted in the second mounting structure (26) and only successfully fitted in the correct orientation with the brake (10) fully assembled,
wherein the pad strap (54) is prevented from being secured over the pads (20, 24) if the pads are incorrectly orientated and/or located.

2. A disc brake (10) according to claim 1 wherein the first (20) and second (24) pads comprise backplates (28, 32) and the first pad (20) has a thicker backplate (28) than the second pad (24).

3. A disc brake (10) according to claim 1 or claim 2 wherein the first pad (20) has a form (42) to engage a piston or tappet of the brake (10).

4. A disc brake (10) according to any preceding claim wherein the second pad (24) has a formation to be supported in a corresponding structure of the bridge portion (16) of the caliper (12) of the brake.

5. A disc brake (10) according to any of claims 1 to 3 wherein the second pad (24) has a formation to be supported in a structure of a carrier (18) of the brake (10).

6. A disc brake (10) according to any preceding claim wherein the formation (60, 62) of at least one of the first (20) and second (24) pads is on a bottom edge thereof.

7. A disc brake (10) according to any preceding claim wherein a formation (60, 62) of at least one of the pads (20, 24) is on a rear face thereof.

8. A disc brake (10) according to any preceding claim wherein the formation (60, 62) of at least one of the pads is on a side edge thereof.

9. A disc brake (10) according to any preceding claim wherein a formation (60, 62) of at least one of the pads is on a top edge thereof.

10. A disc brake (10) according to any preceding claim wherein a formation (60, 62) on at least one of the first (20) and second (24) brake pads comprises a projection or recess to engage with a corresponding feature in the mounting structure (22, 26).

11. A disc brake (10) according to any preceding claim wherein the first (20) and second (24) pads further comprise substantially identical structures (46) for attachment of pad springs (48).

12. A disc brake (10) according to any preceding claim wherein the aperture (17) permits the fitting and removal of the pads (20, 24) to be achieved with the brake disc being in place.

13. A disc brake (10) according to any preceding claim wherein fitting the first (20) and second (24) pads in the corresponding first (22) and second (26) locations and in the correct orientations is the only way of assembling a fully functional brake (10).

## Patentansprüche

1. Scheibenbremse (10), die Folgendes umfasst:
einen Betätigungsmechanismus (12);
einen Bremssattel (12), der aus einem Gehäuseabschnitt (14) und einem Brückenabschnitt (16) gebildet ist;
eine erste (22) und eine zweite (26) Bremsbelagmontagestruktur, die im Gebrauch in der Nähe gegenüber befindlicher innen liegender bzw. außen liegender Flächen eines zu bremsenden Bremsrotors anzuordnen sind;
einen ersten (20) und einen zweiten (24) Bremsbelag, die durch die erste (22) bzw. die zweite (26) Montagestruktur in der Weise angeordnet sind, dass bei Ausübung des Betätigungsmechanismus die Beläge (20, 24) den Rotor einklemmen und Bremsdrehmoment durch die Belagmontagestrukturen (22, 26) zurückwirkt, wobei der erste Belag (20) eine andere funktionale Anforderung als der zweite Belag (24) hat, so dass das Einsetzen des ersten Belags (20) in der zweiten Struktur (26) und/oder des zweiten Belags (24) in der ersten Struktur (22) die Sicherheit, die Funktionalität oder die Dauerhaftigkeit der Bremse (10) beeinträchtigt,
wobei der Bremssattel (12) eine Öffnung (17) zum Einsetzen und Entnehmen der Beläge (20, 24) in einer radialen Richtung aufweist, wobei die Beläge (20, 24) konfiguriert sind, in den Montagestrukturen (22, 26) durch ein Belagband (54) radial gehalten zu werden;
wobei, um ein solches nicht korrektes Einsetzen zu vermeiden oder zu verhindern, der erste Belag (20) auf seiner Umfangsfläche oder seiner hinteren Fläche eine erste Formgebung (60) an einer Stelle besitzt, so dass er nur in die erste Montagestruktur (22) erfolgreich eingesetzt werden kann und nur mit der korrekten Orientierung in Bezug auf die vollständig zusammengefügte Bremse (10) erfolgreich eingesetzt werden kann, und der zweite Belag (24) eine zweite Formgebung (62) aufweist, die von der ersten Formgebung (60) verschieden ist, so dass er nur in die zweite Montagestruktur (26) erfolgreich eingesetzt werden kann und nur mit der korrekten Orientierung in Bezug auf die vollständig zusammengefügte Bremse (10) erfolgreich eingesetzt werden kann,
wobei verhindert wird, dass das Belagband (54) über den Belägen (20, 24) befestigt wird, falls die Beläge nicht korrekt orientiert und/oder angeordnet sind.

2. Scheibenbremse (10) nach Anspruch 1, wobei der erste (20) und der zweite (24) Belag Gegenplatten (28, 32) aufweisen und der erste Belag (20) eine dickere Gegenplatte (28) als der zweite Belag (24) besitzt.

3. Scheibenbremse (10) nach Anspruch 1 oder Anspruch 2, wobei der erste Belag (20) eine Form (42) besitzt, um mit einem Kolben oder Nocken der Bremse (10) in Eingriff zu gelangen.

4. Scheibenbremse (10) nach einem vorhergehenden Anspruch, wobei der zweite Belag (24) eine Formgebung besitzt, die in einer entsprechenden Struktur eines Brückenabschnitts (16) des Bremssattels (12) der Bremse getragen werden soll.

5. Scheibenbremse (10) nach einem der Ansprüche 1 bis 3, wobei der zweite Belag (24) eine Formgebung besitzt, die in einer Struktur eines Trägers (18) der Bremse (10) getragen werden soll.

6. Scheibenbremse (10) nach einem vorhergehenden Anspruch, wobei sich die Formgebung (60, 62) des ersten (20) und/oder des zweiten (24) Belags an einer Unterkante hiervon befindet.

7. Scheibenbremse (10) nach einem vorhergehenden Anspruch, wobei sich eine Formgebung (60, 62) wenigstens eines der Beläge (20, 24) an einer hinteren Fläche hiervon befindet.

8. Scheibenbremse (10) nach einem vorhergehenden Anspruch, wobei sich die Formgebung (60, 62) wenigstens eines der Beläge an einer Seitenkante hiervon befindet.

9. Scheibenbremse (10) nach einem vorhergehenden Anspruch, wobei sich die Formgebung (60, 62) wenigstens eines der Beläge an einer Oberkante hiervon befindet.

10. Scheibenbremse (10) nach einem vorhergehenden Anspruch, wobei eine Formgebung (60, 62) an dem ersten (20) und/oder dem zweiten (24) Bremsbelag einen Vorsprung oder eine Aussparung aufweist, um mit einem entsprechenden Merkmal in der Montagestruktur (22, 26) in Eingriff zu gelangen.

11. Scheibenbremse (10) nach einem vorhergehenden Anspruch, wobei der erste (20) und der zweite (24) Belag ferner im Wesentlichen gleiche Strukturen (46) für die Befestigung von Belagfedern (48) aufweisen.

12. Scheibenbremse (10) nach einem vorhergehenden Anspruch, wobei die Öffnung (17) ermöglicht, das Einsetzen und Entnehmen der Beläge (20, 24) zu erzielen, wenn sich die Bremsscheibe an ihrem Ort befindet.

13. Scheibenbremse (10) nach einem vorhergehenden Anspruch, wobei das Einsetzen des ersten (20) und des zweiten (24) Belags in den entsprechenden ersten (22) bzw. zweiten (26) Ort und in der jeweils korrekten Orientierung die einzige Weise des Zusammenfügens einer vollständig funktionsfähigen Bremse (10) ist.

## Revendications

1. Frein à disque (10), comprenant :
un mécanisme d'actionnement (12) ;
un étrier (12) formé à partir d'une portion de boîtier (14) et d'une portion de pont (16) ;
des première (22) et deuxième (26) structures de fixation de patins de frein devant être situées, pendant l'utilisation, à côté de faces opposées interne et externe respectives d'un rotor de frein à freiner ;
des premier (20) et deuxième (24) patins de frein positionnés par les première (22) et deuxième (26) structures de fixation respectives de telle sorte que lors de l'application du mécanisme d'actionnement, les patins (20, 24) serrent le rotor et qu'un couple de freinage soit appliqué en réaction par les structures de fixation de patins (22, 26), le premier patin (20) ayant une exigence fonctionnelle différente du deuxième patin (24), de telle sorte que l'ajustement du premier patin (20) dans la deuxième structure (26) et/ou du deuxième patin (24) dans la première structure (22) affecte négativement la sécurité, la fonctionnalité ou la durabilité du frein (10),
dans lequel l'étrier (12) comprend une ouverture (17) pour l'ajustement et l'enlèvement des patins (20, 24) dans une direction radiale,
dans lequel les patins (20, 24) sont configurés pour être retenus radialement dans les structures de fixation (22, 26) par une sangle de patin (54) ;
dans lequel, pour empêcher ou éviter un tel ajustement incorrect, le premier patin (20) comprend, sur une face périphérique ou sur une face arrière de celui-ci une première formation (60) dans un emplacement tel qu'il ne puisse être effectivement ajusté que dans la première structure de montage (22) et qu'il ne puisse être effectivement ajusté que dans l'orientation correcte avec le frein (10) entièrement assemblé et le deuxième patin (24) comprend une deuxième formation (62) différente de la première formation (60) de telle sorte qu'il ne puisse être effectivement ajusté que dans la deuxième structure de fixation (26) et qu'il ne puisse être effectivement ajusté que dans l'orientation correcte avec le frein (10) entièrement assemblé dans lequel la sangle de patin (54) ne peut pas être fixée par-dessus les patins (20, 24) si les patins sont orientés et/ou positionnés de manière incorrecte.

2. Frein à disque (10) selon la revendication 1, dans lequel les premier (20) et deuxième (24) patins comprennent des plaques de support (28, 32) et le premier patin (20) a une plaque de support (28) plus épaisse que le deuxième patin (24).

3. Frein à disque (10) selon la revendication 1 ou la revendication 2, dans lequel le premier patin (20) a une forme (42) permettant l'engagement d'un piston ou d'un poussoir du frein (10).

4. Frein à disque (10) selon l'une quelconque des revendications précédentes, dans lequel le deuxième patin (24) a une formation devant être supportée dans une structure correspondante d'une portion de pont (16) de l'étrier (12) du frein.

5. Frein à disque (10) selon l'une quelconque des revendications 1 à 3, dans lequel le deuxième patin (24) a une formation devant être supportée dans une structure d'un support (18) du frein (10).

6. Frein à disque (10) selon l'une quelconque des revendications précédentes, dans lequel la formation (60, 62) d'au moins l'un des premier (20) et deuxième (24) patins est située sur un bord inférieur de celui-ci.

7. Frein à disque (10) selon l'une quelconque des revendications précédentes, dans lequel une formation (60, 62) d'au moins l'un des patins (20, 24) est sur une face arrière de celui-ci.

8. Frein à disque (10) selon l'une quelconque des revendications précédentes, dans lequel la formation (60, 62) d'au moins l'un des patins est sur un côté latéral de celui-ci.

9. Frein à disque (10) selon l'une quelconque des revendications précédentes, dans lequel une formation (60, 62) d'au moins l'un des patins est sur un bord supérieur de celui-ci.

10. Frein à disque (10) selon l'une quelconque des revendications précédentes, dans lequel une formation (60, 62) sur au moins l'un des premier (20) et deuxième (24) patins de frein comprend une saillie ou un retrait pour l'engagement avec un organe correspondant dans la structure de fixation (22, 26).

11. Frein à disque (10) selon l'une quelconque des revendications précédentes, dans lequel les premier (20) et deuxième (24) patins comprennent en outre des structures substantiellement identiques (46) pour la fixation de ressorts de patins (48).

12. Frein à disque (10) selon l'une quelconque des revendications précédentes, dans lequel l'ouverture (17) permet de réaliser l'ajustement et l'enlèvement des patins (20, 24) alors que le disque de frein est en place.

13. Frein à disque (10) selon l'une quelconque des revendications précédentes, dans lequel l'ajustement des premier (20) et deuxième (24) patins dans les premier (22) et deuxième (26) emplacements et dans les orientations correctes est la seule façon d'assembler un frein (10) totalement fonctionnel.
